# FASCICULE DE BREVET EUROPEEN

(11) **EP 1 533 490 B1**
(45) Date de publication et mention de la délivrance du brevet: **29.11.2006**
(21) Numéro de dépôt: 04292701.2
(22) Date de dépôt: 12.11.2004
(51) Int. Cl.: F01N 11/00, F01N 3/023, F01N 3/08, F01N 9/00, F02D 41/02, B01D 53/86

(54) **Procédé et dispositif de désulfatation d'un piège à oxydes nitriques et de régénération d'un filtre à particules**
Verfahren und Vorrichtung zur Entschwefelung eines NOx-Speichers und Regeneration eines Partikelfilers
Mehod and apparatus for the desulphurisation of a NOx storage catalyst and the regeneration of a particulate filter

(30) Priorité: 24.11.2003 FR 0313832
(43) Date de publication de la demande: 25.05.2005
(73) Titulaire: Institut Français du Pétrole, 92852 Rueil Malmaison Cédex (FR); Peugeot Citroën Automobiles S.A., 78140 Vélizy Villacoublay (FR)
(72) Inventeur: Noirot, Rémi, 58600 Garchizy (FR); Castagne, Michel, 92000 Nanterre (FR); Dementhon, Jean-Baptiste, 75011 Paris (FR)

(56) Documents cités:
- EP-A- 0 862 941
- EP-A- 1 086 741
- WO-A-03/031780
- DE-A- 10 126 455
- DE-A- 19 850 757
- US-A1- 2002 081 238
- US-A1- 2003 113 249
- US-A1- 2003 213 235

## Description

La présente invention se rapporte à un procédé pour la désulfatation d'un catalyseur dans lequel sont accumulés des oxydes nitriques, appelé piège à NOx, associé à un filtre à particules régénérable.

Le piège à NOx est généralement utilisé dans une ligne d'échappement d'un moteur à combustion interne, en particulier d'un moteur Diesel.

La désulfatation d'un tel piège est une action indispensable pour maintenir son activité de conversion des NOx de façon durable, du fait essentiellement de son empoisonnement progressif par le soufre contenu dans le carburant et véhiculé par les gaz d'échappement qui le traverse. Ce phénomène a lieu quelque soit la teneur en soufre du carburant, même pour des teneurs en soufre inférieures à 10 ppm.
Pour réaliser les opérations de désulfatation, il est nécessaire de chauffer le piège à une température supérieure à une température prédéterminée (généralement supérieure à 600°C) pendant environ 10 minutes, généralement grâce à une augmentation de la température des gaz d'échappement, et d'avoir une composition globalement réductrice de ces gaz pour permettre la conversion du soufre accumulé dans le piège et ainsi rétablir son activité de conversion.

Cette ligne d'échappement peut également comporter un filtre à particules dont le rôle consiste à retenir les particules présentes dans les gaz d'échappement et éviter ainsi qu'elles soient rejetées dans l'atmosphère.
Ce filtre doit être également régénéré périodiquement afin qu'il conserve toutes ses capacités de filtration. Les opérations de régénération consistent à augmenter la température du filtre au voisinage de 450°C, généralement en augmentant la richesse des gaz d'échappement qui le traversent sans qu'elle n'atteigne la richesse 1, et à obtenir une composition oxydante de ces mêmes gaz pour réaliser la combustion des particules retenues dans ce filtre.

Il est déjà connu, par le document FR 2 825 412, un procédé pour le désulfatage d'un piège à NOx et la régénération d'un filtre à particules.
Dans ce document, un moteur à combustion interne comprend un système d'épuration de gaz d'échappement avec un piège à NOx disposé en amont d'un filtre à particules. Par le procédé décrit, l'état d'encrassement du filtre à particules, ou taux de colmatage, est constamment surveillé et les opérations de régénération de ce filtre à particules sont lancées dés que son taux de colmatage a dépassé un certain seuil. Pendant ces opérations de régénération, l'état de saturation en soufre du piège, ou taux de saturation, est examiné et, si ce taux a atteint une valeur prédéterminée, les opérations de désulfatation du piège à NOx sont lancées à la fin des opérations de régénération. Dans le cas contraire, seules les opérations de régénération du filtre sont effectuées et le piège continue à accumuler le soufre contenu dans les gaz d'échappement.

Ces opérations de désulfatation et de régénération entraînent néanmoins des inconvénients non négligeables.
Notamment, l'efficacité du filtre à particules peut se dégrader localement et durablement du fait de température excessive pendant la régénération, entraînant une dégradation des matériaux du filtre, phénomène qui se produit surtout dans la partie centrale de ce dernier. A l'inverse, la partie externe du filtre peut souffrir d'une montée en température insuffisante, du fait de sa proximité des parois et du caractère non homogène de l'écoulement gazeux qui traverse le filtre, et ne pas être totalement purgée des particules accumulées lors de la régénération.
Par ailleurs, il a pu être constaté que le piège à NOx perd de son efficacité au bout d'un certain nombre d'opérations de désulfatation. En effet, la partie interne des grains des matériaux de stockage constitutifs du piège est difficilement accessible aux gaz d'échappement lors des opérations de désulfatation et des sulfates à structure cristalline très stable à haute température, de l'ordre de 900° C, se forment et condamnent définitivement l'activité de conversion de ces grains. Pour maintenir une efficacité minimale de conversion requise et respecter les objectifs d'endurance du système de dépollution imposés par les réglementations, il est nécessaire d'augmenter la fréquence des opérations de désulfatation à mesure que le véhicule parcourt des kilomètres. Cette fréquence augmente encore plus si le mode de conduite du véhicule est souvent à forte charge. Un tel mode de conduite s'accompagne d'une forte consommation de carburant qui génère un accroissement de l'accumulation de soufre dans le piège. Cet accroissement entraîne une augmentation de la fréquence des opérations de désulfatation, ce qui implique une augmentation de consommation de carburant non négligeable compte tenu du fait que ces opérations nécessitent une richesse des gaz d'échappement supérieure à 1, de l'ordre de 1,1, et une température de ces gaz supérieure à 600°C. De plus, le passage à cette richesse et cette haute température entraînent une forte dégradation de la combustion dans le moteur par le fait qu'il est nécessaire de vanner l'air à l'admission et d'augmenter la quantité de carburant injecté dans la chambre de combustion du moteur.
Un autre inconvénient de la désulfatation est l'émission de composés sulfurés, notamment de l'H₂S, pendant toute la durée des opérations de désulfatation. Cette émission d'H₂S est malodorante et, à forte concentration, peut être dangereuse pour la santé humaine.

Il a pu être également constaté qu'un inconvénient majeur du procédé décrit dans le document précité est que le piège à NOx peut être saturé bien avant que les opérations de régénération du filtre à particules ne soient enclenchées. De ce fait, le piège ne peut plus remplir sa fonction et les composés sulfurés contenus dans les gaz d'échappement seront évacués à l'air libre sans être traités.

La présente invention se propose de remédier aux inconvénients précités grâce à un procédé de désulfatation de piège à NOx et de régénération de filtre à particules qui ne pénalise pas la consommation en carburant et qui permet de garder l'efficacité du piège à NOx à un niveau très élevé tout au long de la vie du véhicule.

A cet effet, l'invention concerne un procédé de désulfatation d'un piège à oxydes nitriques et de régénération d'un filtre à particules disposés dans une ligne d'échappement pour le traitement de gaz d'échappement d'un moteur à combustion interne, notamment d'un moteur Diesel, caractérisé en ce que :
- on évalue le taux de saturation du piège et le taux de colmatage du filtre,
- dès que fun des taux atteint une valeur seuil, on réalise une augmentation de la richesse des gaz d'échappement sans qu'elle atteigne la richesse 1 pour amorcer la régénération du filtre à particules puis on réalise la désulfatation du piège en augmentant ladite richesse à une valeur supérieure à 1.

Avantageusement, on peut réaliser la régénération du filtre à particules à la fin de la désulfatation du piège.

On peut réaliser, pendant la désulfatation du piège, une alternance de périodes de mélange pauvre et de mélange riche des gaz d'échappement.

On peut réaliser une augmentation de la température et une diminution de la concentration en oxygène des gaz d'échappement par traversée desdits gaz dans un élément catalytique.

On peut réaliser, au préalable de la désulfatation, une augmentation de la richesse des gaz d'échappement sans qu'elle atteigne la richesse 1.

On peut réaliser un chauffage des gaz d'échappement par un élément électrique disposé dans la ligne d'échappement.

On peut réguler la température de régénération du filtre à particules en contrôlant la teneur en oxygène des gaz d'échappement.

On peut contrôler la teneur en oxygène par alternance de périodes de richesse inférieure à 1 et de richesse supérieure à 1 des gaz d'échappement.

L'invention concerne également un dispositif de désulfatation d'un piège à piège à oxydes nitriques et de régénération d'un filtre à particules logés dans une ligne d'échappement d'un moteur à combustion interne, notamment d'un moteur Diesel, comprenant une unité de contrôle évaluant le taux de saturation du piège et le taux de colmatage du filtre, caractérisé en ce qu'il comprend des moyens de commande pour associer chaque désulfatation du piège à chaque régénération du filtre dés que l'un des taux a atteint sa valeur seuil et pour réaliser une augmentation de la richesse des gaz d'échappement sans qu'elle atteigne la richesse 1 pour amorcer la régénération du filtre au préalable d'une augmentation de la richesse au delà de 1 pour assurer la désulfatation du piège.

Les moyens de commande peuvent comprendre des moyens de contrôle de la combustion pour réaliser un mélange riche ou un mélange pauvre des gaz d'échappement.

Il peut comprendre un élément catalytique disposé en amont du piège pour réaliser une augmentation de la température et une diminution de la concentration en oxygène des gaz d'échappement.

Il peut comprendre un élément électrique pour chauffer les gaz d'échappement.

Il peut comprendre des moyens de régulation de la température du filtre à particules.

Les moyens de régulation peuvent comprendre des moyens de variation de la richesse des gaz d'échappement autour d'une richesse égale à 1.

Les autres caractéristiques et avantages de l'invention apparaîtront mieux à la lecture de la description qui va suivre, donnée uniquement à titre illustratif et nullement limitatif, en se référant aux dessins annexés sur lesquels :
- la figure 1 montre schématiquement un moteur à combustion interne avec un système de traitement des gaz d'échappement;
- la figure 2 est un graphique montrant l'évolution de la richesse des gaz d'échappement (R) en fonction du temps (t) pendant les séquences de régénération/désulfatation pendant un premier mode opérationnel et
- la figure 3 est un autre graphique montrant l'évolution de la richesse des gaz d'échappement (R) en fonction du temps (t) pendant les séquences de régénération/désulfatation pendant un second mode opérationnel.

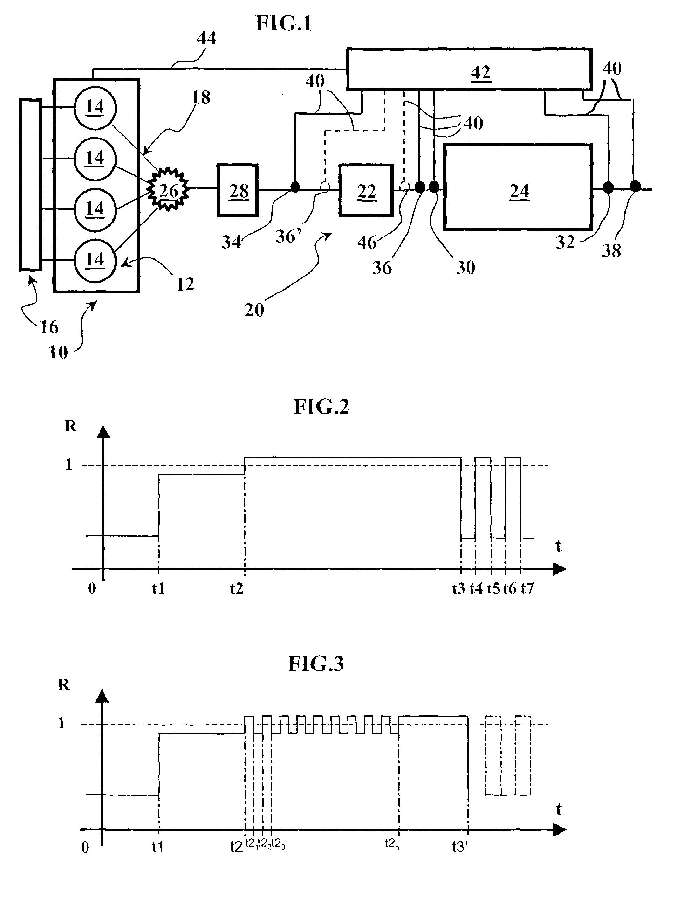

En se rapportant à la figure 1, le dispositif comprend un moteur à combustion interne 10, notamment un moteur de type Diesel, avec au moins un cylindre 12 comprenant une chambre de combustion 14, un moyen d'alimentation en carburant 16 pour les chambres de combustion, des moyens d'admission d'air (non représentés) et des moyens d'échappement des gaz brûlés 18. Les moyens d'échappement de ce moteur sont raccordés à une ligne d'échappement 20 comprenant, en série à partir des moyens d'échappement, un catalyseur 22 sur lequel s'accumulent des oxydes nitriques, dit piège à NOx, disposé en amont d'un filtre à particules 24. Avantageusement, un dispositif de suralimentation 26, tel qu'un turbocompresseur, peut être disposé entre les moyens d'échappement du moteur et le piège à NOx. De même, il peut être prévu de disposer un catalyseur d'oxydation 28 en amont du piège à NOx et en aval du turbocompresseur 26.

La ligne d'échappement 20 comprend avantageusement un capteur de température des gaz d'échappement 30, dit capteur amont, disposé entre le piège à NOx 22 et le filtre à particules 24 et avantageusement un autre capteur de température de gaz d'échappement, dit capteur aval 32, situé à la sortie du filtre à particules. Il est avantageusement prévu une sonde de richesse proportionnelle 34 en amont du piège à NOx servant à mesurer la valeur de la richesse des gaz d'échappement à l'entrée du piège à NOx. Un capteur de pression 36 des gaz d'échappement est disposé en amont du filtre à particules et en aval du piège à NOx, ou en amont du piège à NOx (représenté par la référence 36' en pointillé sur la figure), et un autre capteur de pression des gaz 38 est disposé en aval du filtre à particules. Ces capteurs de pression servent à mesurer la différence de pression des gaz d'échappement entre l'entrée et la sortie du filtre à particules 24 ou entre l'entrée du piège à NOx et la sortie du filtre à particules 24. A noter que ces capteurs de pression peuvent être remplacés par un capteur unique mesurant la différence de pression entre l'amont et l'aval du filtre.

Les différents capteurs et sonde sont reliés par des lignes 40 à une unité de contrôle 42. Cette unité est également reliée au moteur par une ligne bidirectionnelle 44 pour connaître à tout instant les informations liées au fonctionnement du moteur, par exemple comme le régime moteur. L'unité 42 transmet aussi par la ligne 44, après traitement des signaux reçus des capteurs et sonde, des commandes aux différents organes du moteur qui permettent d'influencer la marche du moteur, comme l'injection de carburant 16 et/ou l'admission d'air dans les cylindres 12.

Cette unité de contrôle comprend des modèles lui permettant d'évaluer, à tous moments, le taux de saturation du piège à NOx en fonction de certains paramètres, tels que la composition du carburant et la durée de fonctionnement du moteur, et le taux de colmatage du filtre en fonction de la perte de charge en pression dans ce filtre. De plus, l'unité comprend des tables de données contenant des valeurs seuils du taux de colmatage et du taux de saturation à partir desquels les opérations de désulfatation et de régénération doivent être entreprises.

Alternativement au modèle évaluant le taux de saturation, il peut être prévu une sonde à NOx 46 (représentée en pointillé) disposée en aval du piège 22 et qui sera également reliée par une ligne 40 à l'unité de contrôle 42. Cette sonde permettra de connaître à tous moments le taux de NOx présents dans les gaz d'échappement sortant de ce piège. De même, il peut être prévu d'évaluer le taux de colmatage du filtre grâce à un capteur de particules (non représenté) disposé en amont ou en aval de ce filtre et qui sera aussi relié par une ligne 40 à l'unité 42.

Pendant le fonctionnement du moteur, l'unité 42 calcule la perte de charge en pression des gaz d'échappement entre l'amont du piège et l'aval du filtre à particules 24 grâce aux capteurs amont 36 et aval 38,ou entre l'amont du piège à NOx 22 et l'aval du filtre à particules 24 grâce aux capteurs amont 36' et aval 38 de manière à évaluer l'état de la charge en particules présentes dans le filtre à particules 24. A partir de cette information, il évalue le taux de colmatage du filtre, par l'intermédiaire du modèle mémorisé dans l'unité 42. Simultanément, cette unité évalue le taux de saturation du piège à NOx soit grâce au modèle qu'elle contient, soit par la sonde à NOx 46.

Dès que l'un au moins des taux, c'est-à-dire le taux de colmatage du filtre ou le taux de saturation du piège, a atteint une valeur seuil contenue dans les tables de données de l'unité, on réalise des opérations de désulfatation du piège en association à des opérations de régénération du filtre et cela même si l'autre des taux n'a pas atteint sa valeur seuil.

A titre d'exemple, si le taux de saturation du piège à NOx a été atteint, les opérations de désulfatation de ce piège sont réalisées en association avec les opérations de régénération du filtre à particules et cela même si le taux de colmatage du filtre n'a pas atteint sa valeur seuil. Grâce à cela, non seulement le piège est désulfaté mais aussi le filtre est régénéré avant qu'il n'ait atteint son taux de colmatage. Ceci permet de décaler dans le temps la prochaine période de régénération et de minimiser la perte de charge des gaz d'échappement qui traversent le filtre, perte de charge qui est néfaste au bon fonctionnement du moteur. Inversement, en cas de valeur seuil atteinte par le taux de colmatage du filtre, cette association d'opérations de désulfatation et de régénération est réalisée même si le piège à NOx n'a pas atteint son taux de saturation. Dans ce cas, la partie externe des grains de matériau de stockage de NOx est régénérée avant que le NOx ne diffuse à l'intérieur des grains, ce qui permet de prolonger d'autant plus les périodicités de désulfatation et de maintenir durable la fonction de catalyse de ce piège sans perte progressive d'activité.
Ainsi, quelque soit la nature du taux qui atteint sa valeur seuil (taux de colmatage ou taux de saturation), des opérations de désulfatation du piège à NOx sont réalisées conjointement avec des opérations de régénération du filtre à particules.

Dans un premier mode de réalisation, comme illustré sur la figure 2 à titre d'exemple, le mélange des gaz d'échappement, c'est-à-dire la richesse, est pauvre (par exemple de l'ordre de 0,3) avant l'instant t1 et correspond au fonctionnement normal du moteur. A l'instant t1, moment où le filtre et/ou le piège a atteint un taux de colmatage et/ou de saturation correspondant à sa valeur seuil, la richesse des gaz est augmentée tout en restant inférieure à 1, généralement de l'ordre de 0,8 à 0,9, pour élever la température de ces gaz d'échappement jusqu'à environ 450°C et cela jusqu'à l'instant t2. Cette augmentation de richesse est complétée, à l'instant t2, par une seconde augmentation de la richesse de manière à obtenir un mélange riche, usuellement une richesse d'environ 1,1, pour obtenir des gaz d'échappement à une température d'environ 600°C avec une composition réductrice. Cette richesse est maintenue à ce niveau jusqu'à l'instant t3 pour assurer la désulfatation complète du piège à NOx. A l'instant t3 qui correspond sensiblement à la fin des opérations de désulfatation, la richesse des gaz est diminuée pour obtenir une richesse pauvre à une valeur équivalente sensiblement à celle qu'elle avait avant l'instant t1.
Les différentes richesses et températures des gaz sont en permanence contrôlées par l'unité 42 grâce aux capteurs de température 30 et 32 ainsi qu'à la sonde 34. Si nécessaire, cette unité peut envoyer des instructions de commande par la ligne 44 aux différents organes du moteur pour ajuster les valeurs des richesses et températures à celles requises.

Pour réaliser la première variation de richesse à l'instant t1, l'unité 42 envoie des instructions à certains organes du moteur 10 pour augmenter cette richesse sans qu'elle n'atteigne la richesse 1 (de l'ordre de 0,8 à 0,9) pour permettre aux gaz d'échappement d'avoir une composition oxydante.
A titre d'exemple, il peut être prévu de réaliser une post-injection de carburant dans les chambres de combustion des cylindres 14 par l'intermédiaire des moyens d'alimentation en carburant 16.
Cette augmentation de richesse permet d'augmenter la température des gaz d'échappement pour qu'ils atteignent une température voisine de 450°C afin d'amorcer la régénération du filtre à particules. Après quelques dizaines secondes, à l'instant t2, la richesse des gaz est encore augmentée, par exemple par une autre post-injection dans les chambres de combustion 14, pour dépasser la valeur 1 jusqu'à environ 1,1. Cette seconde augmentation de richesse permet d'augmenter la température des gaz d'échappement jusqu'à environ 600°C. Cette richesse est maintenue pendant quelques minutes, généralement entre 10 et 15 min, pour se terminer à l'instant t3, A cet instant t3, la désulfatation du piège 22 est réalisée et la température des gaz d'échappement qui sort de ce piège est suffisante pour finaliser les opérations de régénération du filtre par combustion des particules de suie présentes dans ce filtre. De plus, du fait des gaz d'échappement à hautes températures générées pour la désulfatation et qui ont traversé le filtre, ces particules sont débarrassées en grande partie de leurs impuretés, dites SOF, comme l'eau ou les hydrocarbures absorbés, et l'ensemble du filtre, y compris les éléments proches des parois, a atteint une température propice à la régénération. Ceci accélère d'autant plus la régénération du filtre par rapport à une régénération habituelle et permet de garantir qu'elle s'effectue de manière complète sur l'intégralité du filtre.
Grâce à cela, les montées brutales de température gérées par le contrôle moteur pour assurer une désulfatation spécifique sont supprimées et la surconsommation de carburant est diminuée. De plus, la formation de sulfates à structure cristalline stable est minimisée puisque la désulfatation du piège a lieu même si la quantité de soufre est minime et l'efficacité du piège à NOx reste à une valeur sensiblement constante. Egalement, cela permet de limiter le niveau de concentration des émissions de H₂S à l'échappement puisque l'accumulation totale du soufre dans ce piège est généralement inférieure à 2g/litre de piège.

De manière avantageuse et en se rapportant à la figure 1, il peut être prévu d'utiliser le catalyseur d'oxydation 28 pour diminuer la concentration en oxygène néfaste aux opérations de désulfatation du piège 22et contribuer à l'augmentation de température des gaz d'échappement.
En effet, lors de la première post-injection de carburant pour assurer l'amorçage de la régénération du filtre 24, de grandes quantités d'hydrocarbures imbrûlés (HC) et d'oxyde de carbone (CO) sont émises à l'échappement. La conversion catalytique de ces HC et CO sur le catalyseur 28 contribue à consommer partiellement l'oxygène contenu dans les gaz d'échappement issus des chambres de combustion du moteur. Ainsi, la diminution de la concentration en oxygène s'effectue plus facilement sans avoir à augmenter la richesse du mélange et conséquemment la consommation de carburant et son impact sur la variation du couple du moteur devient moins perceptible pour le conducteur du véhicule.

Bien entendu, et cela sans sortir du cadre de l'invention, il peut être prévu de réaliser le chauffage des gaz d'échappement par tous moyens connus. Notamment, on peut positionner un élément électrique chauffant les gaz d'échappement en amont du piège à NOx.

Pendant les opérations de régénération, le filtre à particules peut atteindre des températures très élevées (de l'ordre de 750°C) et il peut être gravement endommagé, voire détruit.
Un contrôle de la thermique interne du filtre à particules lors de sa régénération est donc nécessaire pour qu'il garde son intégrité fonctionnelle.
Pour ce faire, la température du filtre à particules est régulée au-dessous d'une valeur limite grâce à un contrôle de la combustion des suies présentes dans le filtre. En pratique, cela se réalise en contrôlant la teneur en oxygène des gaz d'échappement qui traversent ce filtre. En effet, la réduction de la teneur en oxygène des gaz d'échappement, pendant quelques secondes, permet d'arrêter la réaction d'oxydation des suies avant que la température du filtre dépasse la valeur limite de température. Cette réduction de teneur en oxygène se réalise en ayant une richesse des gaz d'échappement supérieure à 1 pendant des périodes t4-t5, t6-t7. Le passage en richesse pauvre, avec une richesse inférieure à 1, pendant des périodes t5-t6 de durée sensiblement égale à celle des périodes de richesse supérieure à 1, permet d'alimenter à nouveau en oxygène la combustion de suies présentes dans le filtre et de régénérer le filtre avec un niveau de température suffisant sans qu'il dépasse la valeur seuil.

Ainsi, lors du fonctionnement du moteur et plus particulièrement à la fin des opérations de désulfatation et pendant les opérations de régénération du filtre à particules 24, le capteur de température 32, disposé en aval de ce filtre, envoie un signal représentatif de la température des gaz d'échappement à l'unité de contrôle 42. Lorsque cette température est proche ou atteint une valeur limite, cette unité envoie des signaux de commande, par la ligne 44, aux différents organes du moteur qui permettent d'influencer la marche de ce moteur, comme l'injection de carburant 16 ou l'admission d'air, de manière à modifier la teneur en oxygène des gaz d'échappement. A titre d'exemple comme représenté sur la figure 2, cette modification consiste, à partir de l'instant t3, à pulser la richesse des gaz d'échappement autour de 1, pendant des périodes t3-t4, t4-t5, t5-t6, t6-t7, afin de réguler la teneur en oxygène des gaz d'échappement qui pénètrent dans le filtre. Cette alternance de richesse pauvre (aux environs de 0,3) et de richesse riche (de l'ordre de 1,1) peut se réaliser grâce à l'envoi d'instructions de commande par l'unité 42 au moyen d'alimentation en carburant 16 de manière à effectuer une post-injection de carburant dans les chambres de combustion 14 à un instant désiré et/ou aux moyens d'admission de manière à limiter la quantité d'air introduite dans ces chambres de combustion.

On se reporte maintenant à la figure 3 montrant un autre mode de réalisation de l'invention.
Ce mode ne diffère de celui décrit en relation avec la figure 2, que par une alternance d'opérations de désulfatation et de régénération entre les instants t2 et t3, par exemple toutes les 15 secondes environ.
Cette alternance aurait pour conséquence d'allonger la durée des opérations de désulfatation, mais il est prévu de réduire cette durée en faisant en sorte qu'à partir de la dernière alternance (à l'instant t2ₙ antérieur à l'instant t3'), la richesse soit maintenue aux environs de 1,1 jusqu'à un instant t3' de manière à ce que la totalité du soufre contenu dans le piège soit éliminé.
Ceci permet d'entretenir, dans l'intervalle de temps nécessaire à la désulfatation, l'amorçage de la régénération du filtre réalisée entre les instants t1 et t2. Grâce à cela, la combustion des particules dans le filtre se poursuit de manière progressive pendant la période t2-t2ₙ, ce qui évite d'avoir un exotherme trop élevé lors de la poursuite de la régénération du filtre au moment t3' et permet de raccourcir le temps nécessaire à la régénération de ce filtre. De plus, cette alternance permet de limiter le niveau d'émission de H₂S lors des opérations de désulfatation de manière à ce qu'il ne dépasse pas environ 300 ppm.

Pour réaliser cette alternance, à l'instant t2 la richesse est augmentée, comme précédemment décrit en relation avec la figure 2, jusqu'à environ 1,1. Cette richesse est maintenue jusqu'à l'instant t2₁, puis elle diminue jusqu'à une valeur d'environ 0,8 à 0,9 maintenue jusqu'à l'instant t2₂, puis augmente jusqu'à une valeur de 1,1 à l'instant t2₃. Cette alternance se reproduit jusqu'à l'instant t2ₙ qui est fonction des caractéristiques et des performances du piège. Pendant la période t2-t2₁, les gaz d'échappement ont une température et une composition telles que les opérations de désulfatation du piège se réalisent. Entre les instants t2₁ et t2₂, les gaz d'échappement contiennent une quantité minime d'oxygène mais suffisante pour continuer à brûler une partie des particules contenues dans le filtre et ces gaz sont suffisamment réducteurs pour continuer les opérations de désulfatation. Ces alternances d'opérations de désulfatation et de régénération se poursuivent jusqu'à l'instant t2ₙ. A partir de cet instant la richesse est augmentée jusqu'a environ 1,1 et est maintenue jusqu'à l'instant t3' qui correspond au moment où la totalité du soufre contenu dans le piège est éliminé. A l'instant t3', la richesse est diminuée pour arriver aux environs de 0,3 de manière à finaliser les opérations de régénération du filtre, comme précédemment décrit en relation avec la figure 2.

Bien entendu, comme cela a déjà été décrit en relation avec cette figure, il peut être prévu de réguler l'exotherme du filtre 24 en pulsant la richesse des gaz d'échappement autour de 1 (représenté en pointillé sur la figure), à l'instant t3', afin de contrôler la teneur en oxygène des gaz d'échappement qui traversent le filtre.

La présente invention n'est pas limitée aux exemples décrits mais englobe tous équivalents et variantes.

## Revendications

1. Procédé de désulfatation d'un piège à oxydes nitriques (22) et de régénération d'un filtre à particules (24) disposés dans une ligne d'échappement (20) pour le traitement de gaz d'échappement d'un moteur à combustion interne (10), notamment d'un moteur Diesel, **caractérisé en ce que** :
- on évalue le taux de saturation du piège et le taux de colmatage du filtre,
- dès que l'un des taux atteint une valeur seuil, on réalise une augmentation de la richesse des gaz d'échappement sans qu'elle atteigne la richesse 1 pour amorcer la régénération du filtre à particules (24) puis on réalise la désulfatation du piège (22) en augmentant ladite richesse à une valeur supérieure à 1.

2. Procédé selon la revendication 1, **caractérisé en ce qu'**on finalise la régénération du filtre à particules à la fin de la désulfatation du piège.

3. Procédé selon la revendication 1 ou 2, **caractérisé en ce qu'**on réalise, pendant la désulfatation du piège, une alternance de périodes de mélange pauvre et de mélange riche des gaz d'échappement.

4. Procédé selon l'une des revendications précédentes, **caractérisé en ce qu'**on réalise une augmentation de la température et une diminution de la teneur en oxygène des gaz d'échappement par traversée desdits gaz dans un élément catalytique (28).

5. Procédé selon l'une des revendications précédentes, **caractérisé en ce qu'**on réalise un chauffage des gaz d'échappement par un élément électrique disposé dans la ligne d'échappement.

6. Procédé selon l'une des revendications précédentes, **caractérisé en ce qu'**on régule la température de régénération du filtre à particules en contrôlant la teneur en oxygène des gaz d'échappement.

7. Procédé selon la revendication 6, **caractérisé en ce qu'**on contrôle la teneur en oxygène par alternance de période de richesse inférieure à 1 et de richesse supérieure à 1 des gaz d'échappement.

8. Dispositif de désulfatation d'un piège à oxydes nitriques (22) et de régénération d'un filtre à particules (24) logés dans une ligne d'échappement (20) d'un moteur à combustion interne (10), notamment d'un moteur Diesel, comprenant une unité de contrôle (42) évaluant le taux de saturation du piège et le taux de colmatage du filtre, **caractérisé en ce qu'**il comprend des moyens de commande (42, 16) pour associer chaque désulfatation du piège à chaque régénération du filtre dés que l'un des taux a atteint sa valeur seuil et pour réaliser une augmentation de la richesse des gaz d'échappement sans qu'elle atteigne la richesse 1 pour amorcer la régénération du filtre au préalable d'une augmentation de la richesse au delà de 1 pour assurer la désulfatation du piège.

9. Dispositif selon la revendication 8, **caractérisé en ce que** les moyens de commande comprennent des moyens de contrôle de la combustion (16) pour réaliser un mélange riche ou un mélange pauvre des gaz d'échappement.

10. Dispositif selon la revendication 8 ou 9, **caractérisé en ce qu'**il comprend un élément catalytique (28) disposé en amont du piège (22) pour réaliser une augmentation de la température et une diminution de la teneur en oxygène des gaz d'échappement.

11. Dispositif selon l'une des revendications 8 à 10, **caractérisé en ce qu'**il comprend un élément électrique pour chauffer les gaz d'échappement.

12. Dispositif selon l'une des revendications 8 à 11, **caractérisé en ce qu'**il comprend des moyens (16, 28) de régulation de la température du filtre à particules (24).

13. Dispositif selon la revendication 12, **caractérisé en ce que** les moyens de régulation comprennent des moyens de variation (16, 28) de la richesse des gaz d'échappement autour d'une richesse égale à 1

## Claims

1. A method for the desulphation of a nitric oxide trap (22) and for the regeneration of a particulate filter (24) arranged in an exhaust line (20) for treating exhaust gas from an internal combustion engine (10), particularly a diesel engine, **characterised in that**:
- the rate of saturation of the trap and the rate of clogging of the filter are determined,
- as soon as one of the rates reaches a threshold value, an increase in the richness of the exhaust gases is effected without it reaching the richness 1 in order to initiate the regeneration of the particulate filter (24), then the desulphation of the trap (22) is effected by increasing said richness to a value greater than 1.

2. The method according to Claim 1, **characterised in that** the regeneration of the particulate filter is completed at the end of the desutphation of the trap.

3. The method according to Claim 1 or 2, **characterised in that**, during the desulphation of the trap, an alternation of periods of lean mixture and rich mixture of the exhaust gases is effected.

4. The method according to one of the preceding claims,
**characterised in that** a temperature increase and an oxygen content decrease in the exhaust gases are effected by passing said gases through a catalytic element (28).

5. The method according to one of the preceding claims,
**characterised in that** heating of the exhaust gases is effected by an electrical element arranged in the exhaust line.

6. The method according to one of the preceding claims,
**characterised in that** the particulate filter regeneration temperature is regulated by controlling the oxygen content in the exhaust gases.

7. The method according to Claim 6, **characterised in that** the oxygen content is controlled by alternating a period of a richness less than 1 and of a richness greater than 1 of the exhaust gases.

8. A device for the desulphation of a nitric oxide trap (22) and for the regeneration of a particulate filter (24) housed in an exhaust line (20) of an internal combustion engine (10), particularly a diesel engine, including a control unit (42) determining the trap saturation rate and the filter clogging rate, **characterised in that** it includes operating means (42, 16) for associating each desulphation of the trap with each filter regeneration as soon as one of the rates has reached its threshold value, and for effecting an increase in the richness of the exhaust gases without it reaching the richness 1 in order to initiate the regeneration of the filter prior to an increase in the richness beyond 1 so as to ensure the desulphation of the trap.

9. The device according to Claim 8, **characterised in that** the operating means include means for controlling the combustion (16) in order to effect a rich or a lean mixture of the exhaust gases.

10. The device according to Claim 8 or 9, **characterised in that** it includes a catalytic element (28) arranged upstream of the trap (22) in order to effect an increase in the temperature and a decrease in the oxygen content of the exhaust gases.

11. The device according to one of the Claims 8 to 10, **characterised in that** it includes an electrical element for heating the exhaust gases.

12. The device according to one of Claims 8 to 11, **characterised in that** it includes means (16, 28) for regulating the temperature of the particulate filter (24).

13. The device according to Claim 12, **characterised in that** the regulating means include means (16, 28) for varying the richness of the exhaust gases around a richness equal to 1.

## Patentansprüche

1. Verfahren zur Entschwefelung eines Stickoxid-Speicherkats (22) und zur Regenerierung eines Partikelfilters (24), die in einer Abgasleitung (20) angebracht sind, um das Abgas eines Verbrennungsmotors (10), insbesondere eines Dieselmotors zu behandeln, **dadurch gekennzeichnet dass**:
- der Sättigungsgrad des Stickoxid-Speicherkats und der Verblockungsgrad des Filters bewertet wird
- ab dem Moment, wo einer der Grade einen Schwellenwert erreicht, die Abgase angefettet werden, ohne dass sie einen Wert von 1 für den Kehrwert von Lambda erreichen, um die Regenerierung des Partikelfilters (24) zu starten, und dann die Entschwefelung des Stickoxid-Speicherkats (22) durchgeführt wird, indem der Kehrwert von Lambda auf einen Wert von mehr als 1 erhöht wird.

2. Verfahren nach Anspruch 1, **dadurch gekennzeichnet, dass** die Regenerierung des Partikelfilters am Ende der Entschwefelung des Stickoxid-Speicherkats beendet wird.

3. Verfahren nach Anspruch 1 oder 2, **dadurch gekennzeichnet, dass** während der Entschwefelung des Speicherkats zwischen Perioden mit magerem und fettem Gemisch der Abgase gewechselt wird.

4. Verfahren nach einem der vorhergehenden Ansprüche, **dadurch gekennzeichnet, dass** eine Erhöhung der Temperatur und eine Verringerung des Sauerstoffgehalts der Abgase erzielt wird, indem die Gase ein katalytisches Element (28) passieren.

5. Verfahren nach einem der vorhergehenden Ansprüche, **dadurch gekennzeichnet, dass** die Abgase durch ein elektrisches Element, das in der Abgasleitung angeordnet ist, aufgeheizt werden.

6. Verfahren nach einem der vorhergehenden Ansprüche, **dadurch gekennzeichnet, dass** die Regenerierungstemperatur des Partikelfilters geregelt wird, indem der Sauerstoffgehalt der Abgase gesteuert wird.

7. Verfahren nach Anspruch 6, **dadurch gekennzeichnet, dass** der Sauerstoffgehalt der Abgase durch Wechsel von Perioden mit einem Kehrwert von Lambda unter 1 und einem Kehrwert von Lambda über 1 gesteuert wird.

8. Vorrichtung zur Entschwefelung eines Stickoxid-Speicherkats (22) und zur Regenerierung eines Partikelfilters (24), die in einer Abgasleitung (20) eines Verbrennungsmotors (10), insbesondere eines Dieselmotors angeordnet sind, die mindestens eine Steuereinheit (42) umfasst, die den Sättigungsgrad des Speicherkats und den Verblockungsgrad des Filters auswertet, **dadurch gekennzeichnet, dass** sie Steuermittel (42, 16) umfasst, um jede Entschwefelung des Speicherkats gemeinsam mit jeder Regeneration des Partikelfilters durchzuführen, sobald einer der Grade seinen Schwellenwert erreicht hat, und um das Abgas anzufetten, ohne dass der Kehrwert von Lambda 1 erreicht, um die Regenerierung des Filters zu starten, bevor der Kehrwert von Lambda über 1 erhöht wird, um die Entschwefelung des Speicherkats sicherzustellen.

9. Vorrichtung nach Anspruch 8, **dadurch gekennzeichnet, dass** die Steuermittel Mittel zur Kontrolle der Verbrennung (18) umfassen, um ein fettes oder mageres Gemisch der Abgase erzielen.

10. Vorrichtung nach Anspruch 8 oder 9, **dadurch gekennzeichnet, dass** er ein Katalysatorelement (28) umfasst, das vor dem Speicherkat (22) angeordnet ist, um eine Erhöhung der Temperatur und eine Verringerung des Sauerstoffgehalts der Abgase zu erreichen.

11. Vorrichtung nach einem der Ansprüche 8 bis 10, **dadurch gekennzeichnet, dass** sie ein elektrisches Element umfasst, um die Abgase aufzuheizen.

12. Vorrichtung nach einem der Ansprüche 8 bis 11, **dadurch gekennzeichnet, dass** sie Mittel (16,28) zur Regelung der Temperatur des Partikelfilters (24) umfasst.

13. Vorrichtung nach Anspruch 12, **dadurch gekennzeichnet, dass** die Mittel (16, 28) zur Regulierung Mittel zum Verändern des Kehrwertes von Lambda des Abgasgemisches umfassen, rund um einen idealen Lambda-Wert 1.
